# EUROPEAN PATENT APPLICATION

(11) **EP 2 458 576 A1**
(43) Date of publication of application: **30.05.2012**
(21) Application number: 11787779.5
(22) Date of filing: 25.02.2011
(51) Int. Cl.: G09B 19/10, C04B 14/10

(54) **NON-HARDENING CLAY COMPOSITE AND METHOD FOR MANUFACTURING SAME**

(30) Priority: 19.08.2010 KR 20100080501
(71) Applicant: MCA Sand Co., Ltd, Deajeon 306-810 (KR)
(72) Inventor: CHO, Jung Yong, Deajeon 302-120 (KR)
(74) Representative: Serjeants LLP
(86) International application number: PCT/KR2011/001361
(87) International publication number: WO 2012/023682

(57) **Abstract**

Disclosed is a clay composition that can be used for play, education, work modeling and the like as an alternative to conventional general clay or sand, artificial clay, rubber clay, paper clay and the like. In particular, disclosed are a novel form of an environmentally friendly clay composition that is not hardened and thus maintains its original form for a long period of time and can be re-used without water, and a method for preparing the same. Provided is a novel form of clay material which is not hardened and can be repeatedly used for a long period of time, since it is prepared by mixing porous diatomite particles as a base material with an amphiprotic (hydrophilic and lipophilic) liquid, followed by kneading. The clay composition enables formation of various shapes of clays which have plasticity as an inherent properties of clay and looseness as an inherent property of soil, can be repeatedly aggregated and separated as an inherent property of sand, and have different characteristics and forms, depending on control of components and additives. In addition, the clay composition contains environmentally friendly natural substances and thus enables children to safely touch and play with the clay for a long period of time, supports various functional substances such as antibacterial substances using porous diatomite as a medium and can continuously exhibit effects of the functional substances.

## Description

### [Technical Field]

The present invention relates to a clay composition that can be used for play, education, work modeling and the like as an alternative to conventional general clay or sand, artificial clay, rubber clay, paper clay and the like. More specifically, the present invention relates to a novel type of environmentally-friend clay composition that is not hardened and thus maintains its original form for a long period of time and can be re-used without water, and a method for preparing the same.

### [Background Art]

A great deal of techniques associated with artificial sand and clay that can be used for play or education instead of natural sand or clay have been reported. Korean Patent No. 231408 discloses a modeling composition for handcraft applications, Korean Patent Laid-open No. 2004-361 discloses a method for preparing adhesive sand and a three-dimensional learning method using the same, US Patent No. 6,235,070 discloses adhesive sand and a method for preparing the same, Korean Patent No. 598001 discloses a sand mixture and a method for preparing the same, US Patent No. 5,873,933 discloses a malleable play material mixture having similar texture to loose soil, and Korean Patent Laid-open No. 2006-11619 discloses a functional artificial clay which is naturally cured and releases perfume upon application of pressure.

In brief, the modeling composition for handcraft disclosed in Korean Patent No. 231408 is obtained by mixing water, salt, flour, starch, crushed rock, aluminum sulfate, an oil, borax, magnesium chloride, sodium benzoate, titanium dioxide and a dye at a suitable mix ratio, followed by stirring, heating and molding. This composition has advantages in that it can be easily kneaded even with a small amount of water, enables prevention of freezing and decay and maintenance of moisture, and has pleasant texture owing to flour, starch and the like.

The adhesive sand disclosed in Korean Patent Laid-open No. 2004-361 is obtained by a method for producing sand that involves repeated modeling (formation) and dispersion depending on applied force. The method includes heating 80 to 90% by weight of sand at 75 to 90°C, adding 0.5 to 3.5% by weight of Carnauba wax thereto, mixing these components until the components are melted and coated at that temperature, adding 8 to 12% by weight of a beeswax and 1.5 to 4.5% by weight of lanolin thereto, allowing the components to be dissolved and coated while maintaining at 55 to 70°C, followed by slowly cooling.

Both the adhesive sand disclosed in US 6,235,070 and the sand based mixture disclosed in Korean Patent No. 598001 are sand based mixtures which contain sand particles and a binder. The binder forms a coating on the sand particles and is one or more selected from the group consisting of beeswax, ceresin wax, a microcrystalline wax, and a mixture of earth wax and paraffin wax. The sand may be used for toy materials, educational materials and imitated construction design materials and landscaping design construction materials of museums or aquariums and the like.

The malleable play material mixture having similar texture to loose soil disclosed in US Patent No. 5,873,933 contains a malleable amorphous binder and a great amount of sand, wherein the binder contains water-soluble cellulose, polyvinyl alcohol, propylene glycol, water, sodium tetraborate, sodium carbonate and the like. This mixture exhibits unique texture since the malleable binder is linked to the great amount of sand and has a granular, malleable and amorphous structure.

In addition, the functional artificial clay which is naturally cured and releases perfume upon application of pressure disclosed in Korean Patent Laid-open No. 2006-11619 is prepared by mixing polyvinyl alcohol and ethylene vinyl acetate as base materials, a low-density hollow polyacrylonitrile powder and thermal-expandable microspheres as fillers, a thickening agent, glycerin, a dry-retarding agent and other additives at room temperature, or mixing with heating.

However, these conventional adhesive sands, artificial clays or the like have similar physical properties and appearance to conventional sand, moist sand or paraffin-coated oily sand, natural clay and the like and thus do not apply spark interest in babies, toddlers and children. In addition, these sands have problems of the necessity of water upon use, limited applicability to modeling, the difficulty of re-use due to hardening over time although modeling is possible, and occurrence of environmental pollution due to waste disposal except storage of artwork. In particular, paraffin-coated adhesive sands have disadvantages in that they cause great inconvenience since paraffin is adhered on the bottom, hands, clothes and the like, bacteria and dust adhered thereon are not readily removed, are decayed within a short time and render an unpleasant smell or stickiness.

In addition, commercially available products are mostly rubber clay and plastic clay which cause environmental hormones (endocrine disruptors), products using natural substances such as crops (grains) or flour also contain toxic substances such as a bond, a preservative or a bleaching agent and are disadvantageously not suitable for use as toys children can safely touch and play with.

The inventors of the present invention developed air clay which exhibits texture and characteristics which dramatically differ from those of conventional adhesive sands or artificial clays and can be repeatedly used without water and this clay was granted a patent under Korean Patent No. 10-0874091 to the inventors. This air clay contains a base material such as a finely ground sand powder and glycerin. When the clay is extended, it stretches, air is absorbed therein, the clay thus becomes loose and soft as like cloud, cotton or snow. When the clay is aggregated by applying force thereto, the air escapes and the clay becomes dense and hard. Due to these behaviors, these sands accomplish several problems and restrictions of conventional adhesive sand or artificial clay. However, there is a need to improve surface properties or physical properties to diversify properties and states of the air clay and thereby utilize the same in a variety of applications, and to bond functional substances to the air clay or support the same thereon and thereby impart functionalities such as antibacterial properties thereto.

### [Disclosure]

### [Technical Problem]

Therefore, the present invention has been made in view of the above problems, and it is one object of the present invention to provide a clay composition that does not harden and thus maintains its original form for a long period of time and can be re-used without water and a method for preparing the same.

It is another object of the present invention to provide a clay composition which enables formation of various types of clays which have plasticity as an inherent properties of clay and looseness as an inherent property of soil, can be repeatedly aggregated and separated as an inherent property of sand, are little sticky, and have different characteristics and forms depending on control of components and additives, and a method for preparing the same.

It is another object of the present invention to provide an environmentally friendly safe clay composition which contains an environmentally friendly natural substance as a main component, and thus enables children to safely touch and play with the clay for a long period of time, and naturally decomposes upon disposal after use, and a method for preparing the same.

It is another object of the present invention to provide a clay composition which optionally contains a functional substance such as an antibacterial substance or is bonded thereto, and thus continuously maintains antibacterial functionality and a method for preparing the same.

### [Technical Solution]

In accordance with one aspect of the present invention, provided is a clay composition containing: (a) 100 parts by weight of a diatomite powder (a first base material) cut to a size of 10 to 10,000 mesh, and (b) 5 to 70 parts by weight of an amphiprotic (hydrophilic and lipophilic) liquid, wherein the clay composition has plasticity as an inherent property of clay and looseness as an inherent property of soil, can be repeatedly aggregated and separated as an inherent property of sand, is not readily hardened in air and can be repeatedly used without water, when the diatomite powder and the liquid are sufficiently mixed and kneaded such that the liquid passes through pores of the diatomite powder and is dispersed therein.

In accordance with another aspect of the present invention, provide is a method for preparing a clay composition, including: mixing a component (a) below with a component (b) below; and sufficiently kneading the components (a) and (b) such that the liquid passes through pores of the diatomite powder and is dispersed therein.
(a) 100 parts by weight of diatomite powder (first base material) cut to a size of 10 to 10,000 mesh, and
(b) 5 to 70 parts by weight of an amphiprotic (hydrophilic and lipophilic) liquid

### [Description of Drawings]

FIG. 1 is a schematic view illustrating a concept of a clay composition of the present invention;
FIG. 2 is an image showing the surface of diatomite;
FIG. 3 is an image showing the surface of general sand;
FIGS. 4 and 5 are images showing a clay composition according to Example 2 of the present invention;
FIGS. 6 and 7 are images showing a clay composition according to Example 3 of the present invention;
FIGS. 8 and 9 are images showing a clay composition according to Example 10 of the present invention; and
FIGS. 10 and 11 are images showing a clay composition according to Example 13 of the present invention.

### [Best Mode]

Hereinafter, preferred embodiments of the clay composition and a method for preparing the same according to the present invention will be described. The following configuration is provided only as one embodiment and does not represent all technical concepts of the present invention. Therefore, it will be appreciated that various modifications and substitutions of the embodiments may be made at the filing date of the present invention.

The clay composition of the present invention essentially contains a first base material and a liquid, may optionally contain a second base material so that the composition can obtain a variety of textures and physical properties, and may optionally contain an additive such as a natural antibacterial substance so that the composition can provide functionality such as antibacterial property.

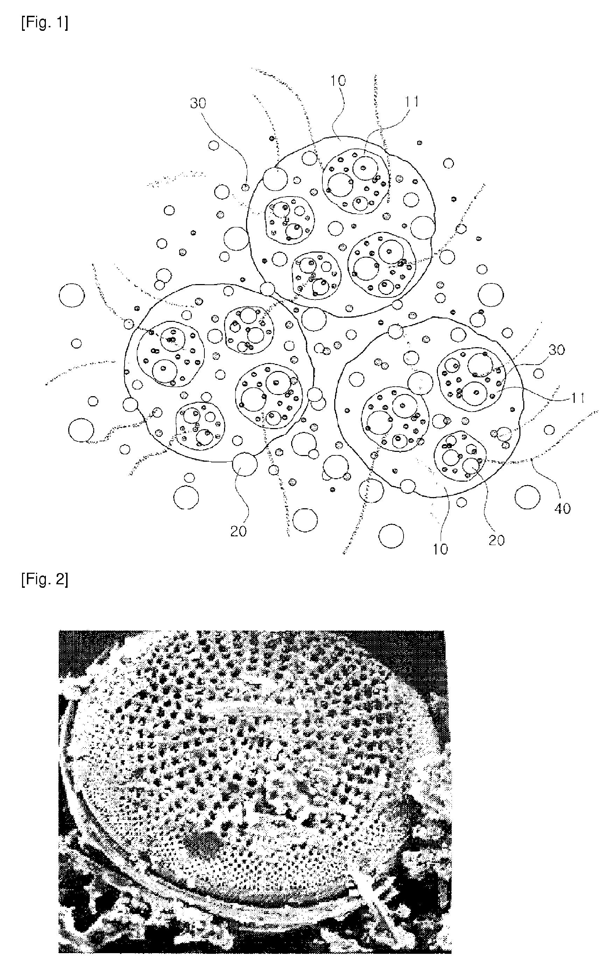

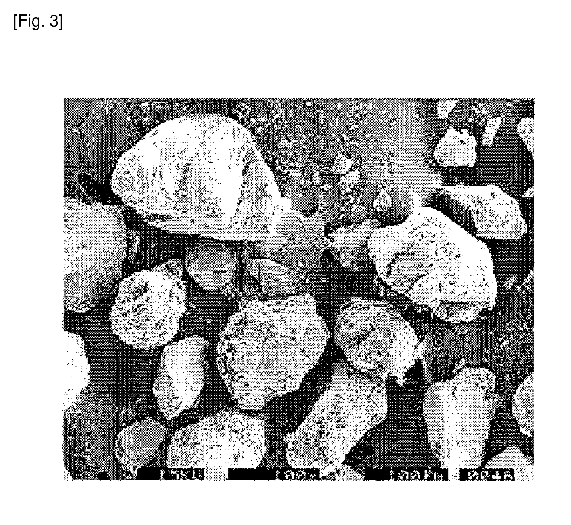

In this composition, a diatomite powder is a porous first base material having a plurality of pores, which serves as a medium where an amphiprotic liquid, additives dissolved or emulsified in the liquid, or the second base material passes through the pores and is dispersed. Diatomite is a soft rock and soil derived from dead diatoms and has a plurality of pores. FIG. 2 is an image showing the surface of diatomite. From FIG. 2, it can be seen that the surface of diatomite has a porous structure, unlike the surface of general sand shown in the image of FIG. 3. Preferably, the diatomite is a rock composed of a fossiliferous stratum and is baked at a high temperature of 1,250°C or higher. Diatomite is ground to a particle size which is at least higher than a pore size in order to utilize the pores, preferably to a size of about 10 to about 10,000 mesh. When the particles of diatomite powder are excessively large, the clay becomes rough in texture. Accordingly, the particle size of diatomite is preferably determined within this range depending on the desired texture.

The liquid in the composition should be amphiprotic (both hydrophilic and lipophilic) miscible with both an oil and water, since it should be capable of dissolving all of diatomite, the second base material and other additives. The amphiprotic liquid passes through pores of diatomite powder (first base material), is dispersed in the composition, imparts adhesivity to the base material and serves as a medium which dissolves and emulsifies the second base material and an additive such as an antibacterial substance and thereby enables the same to be dispersed in the first base material. The amphiprotic liquid is preferably selected from the group consisting of propylene glycol (PG); polyethylene glycol (PEG); glycerin and combinations thereof. The amphiprotic liquid is present in an amount of 5 to 70 parts by weight with respect to 100 parts by weight of the first base material. When the amphiprotic substance is used in an amount of 50% or more of the total weight of base material, the final product becomes mushy and cannot be used as clay, and when the amphiprotic substance is used in an amount of 5% or more of the total weight of the base materials, disadvantageously, adhesion is lacking and the composition thus becomes loose.

Clays having a variety of textures and characteristics can be obtained by mixing the diatomite powder as the first base material with various substances which have been cut to a fine powder size equivalent to or smaller than the pore size of diatomite using the liquid. The second base material should have a particle size equivalent to or smaller than the pore size of diatomite powder, preferably, a particle size equivalent to or smaller than 1/10 of the diatomite powder, more preferably, a particle size of about 100 to about 100,000 mesh within this range. The second base material is present outside or inside the pore of the diatomite powder, the first base material, in the presence of the liquid as a medium in the composition. The second base material is present in an amount of 10 to 100 parts by weight, with respect to 100 parts by weight of the first base material. When the content of the second base material exceeds 100 parts by weight, the pores of the diatomite powder become clogged and inherent adhesivity may be deteriorated. The second base material is selected from the group consisting of sand, shells, quartz sand, red clay, white clay, cereals, hard shells of nuts, Cocopeat, sawdust and combinations thereof. Examples of the cereals include rice, barley, beans, millet, sorghum, wheat and the like. Examples of the hard shells of nuts include hard shells of peanuts and walnuts.

The clay composition of the present invention may further contain a natural antibacterial substance as a functional additive. The natural antibacterial substance is preferably selected from the group consisting of a grapefruit extract, a garlic extract containing allicin, a green tea extract, nano-silver and a combination thereof. The natural antibacterial substance may be present in an amount required for exhibition of antibacterial action and may be varied depending on the type of the antibacterial substance. The grapefruit extract (DF-100™) may be present in an amount of 0.1 to 10 parts by weight with respect to 100 parts by weight of the first base material. The natural antibacterial substance such as grapefruit extract is readily dissolved in the liquid, preferably may be contained in the composition in a state in which the substance is dissolved in the liquid. Since the first base material, diatomite powder, is porous, the antibacterial substance may be stably contained in the form of a mixture using the liquid using pores of diatomite and continuously exerts effects thereof.

The clay composition of the present invention may further contain a coagulant. The coagulant is a reagent which is added to a liquid to form an aggregate of a plurality of solid particles suspended in the liquid, which is used for water disposal or the like. Examples of useful coagulants include inorganic electrolytes such as calcium hydroxide, facula, aluminum chloride, ferric oxide, ferrous sulfate, organic polymer compounds such as starches, polyacrylamide and derivatives thereof, and combinations of an inorganic electrolyte and an organic polymer compound. An organic polymer compound such as polyacrylamide or a derivative thereof is preferred. When a coagulant is added to the composition having a homogeneous phase using the liquid as a medium, followed by kneading, the overall thick emulsion is obtained, which is tough and potently adhesive. The coagulant is present in an amount of 0.1 to 70 parts by weight, more preferably 0.5 to 20 parts by weight, with respect to 100 parts by weight of the first base material.

The clay composition of the present invention may further contain polyvinyl alcohol or gelatin. When polyvinyl alcohol or gelatin is present in the liquid by dissolution, a composition which is remarkably distinguished from the clay composition in terms of characteristics such as adhesivity and texture is obtained. Polyvinyl alcohol or gelatin is preferably present in an amount of 10 to 100 parts by weight, with respect to 100 parts by weight of the first base material.

To coat the component particles contained in the clay composition of the present invention with an oil, the composition may further contain 0.1 to 50 parts by weight of one or more selected from the group consisting of liquid paraffin and waxes. By coating the composition with a light oil, it is possible to obtain moisturizing effects, prevent the hand from being stained with the composition, block a variety of harmful substances, suppress diffusion of odor and maintain properties of products for a long period of time.

The clay composition of the present invention may optionally contain, in addition to the antibacterial substance, various functional substances such as natural flavorings and aromas. These functional substances can be stably dispersed and maintained outside or inside the pore structure of diatomite powder, the first base material, in the form of a mixture using the liquid and can continuously exert effects. The composition may further optionally contain an additive and, in particular, the additive may contain a colorant to impart a variety of colors to the clay composition. The colorant may be selected from non-toxic natural and synthetic colorants and may be selected from a variety of dyes and pigments regardless of water-solubility or oil-solubility.

The clay composition of the present invention constitutes a new substance phase obtained by blending the irregular and porous diatomite powder and the amphiprotic liquid (or liquid containing a second base material, a functional substance or the like). FIG. 1 is a view illustrating a concept of the clay composition of the present invention. The second base material 20 and the additive 30 such as an antibacterial substance are dispersed inside pores 11 of porous diatomite particles 10, the first base material, and between the diatomite particles 10. The clay composition of the present invention has plasticity as an inherent property of clay and looseness, as an inherent property of soil and can be repeatedly aggregated and separated, as an inherent property of sand, is not readily hardened in air and can be repeatedly used without water. By controlling the components and content of the second base material in the composition, a variety of characteristics can be controlled so that the composition can remarkably exhibit one of clay, soil and sand characteristics.

Hereinafter, preferred embodiments of the clay composition of the present invention will be described. The meaning of the terms used for the preferred embodiments and components constituting the composition are the same as those associated with the clay composition mentioned above, and a detailed explanation thereof is thus omitted.

In accordance with the preparation method of the present invention, the first base material, the second base material, the liquid and the like are mixed and kneaded, to completely combine the components and thus to obtain a clay having a novel shape and properties. Separately, the diatomite and the second base material are finely ground to a specific particle size. The diatomite is preferably baked at 1,250°C or higher before grinding. The functional substance such as a natural antibacterial substance, polyvinyl alcohol or gelatin is preferably dissolved in the liquid, before it is added and then mixed. Preferably, respective components are mixed and then kneaded in a kneader. At this time, when a coagulant is added to the kneaded mixture, the resulting mixture becomes a thick emulsion and is tough and potently adhesive. After continuous kneading, the emulsion is adhesive and transforms from loose to gummy to form a novel form of clay in which all the components are completely combined. During the final process after kneading, or before mixing and kneading, one or more selected from the group consisting of liquid paraffin and waxes is added to the liquid and the composition may be lightly coated with an oil. The clay composition thus coated does not readily stick to the hand and is smooth in texture.

### [Mode for Invention]

Now, the present invention will be described in more detail with reference to the following Examples and Test Examples. These examples are only provided to illustrate the present invention and should not be construed as limiting the scope and spirit of the present invention.

### Example 1

(1) Diatomite which has been baked at 1,250°C or higher was ground to a size of about 100 mesh.
(2) 100 parts by weight of the diatomite powder prepared in (1) was mixed with 15 parts by weight of glycerin, kneaded in a kneader, one part by weight of a coagulant (organic polymer coagulant, available from Hansol Chemical Inc.) was added thereto, followed by continuously kneading until the substances were completely combined to form a stable shape. As a result, a clay composition having an intermediate adhesion was obtained.

### Example 2

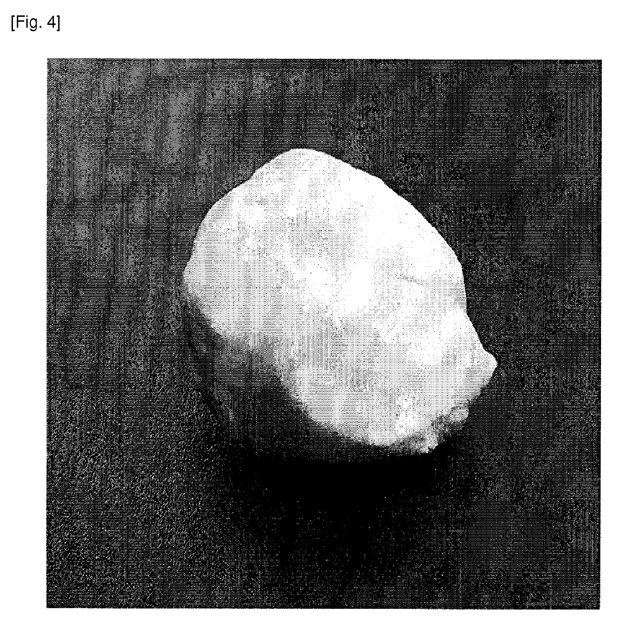

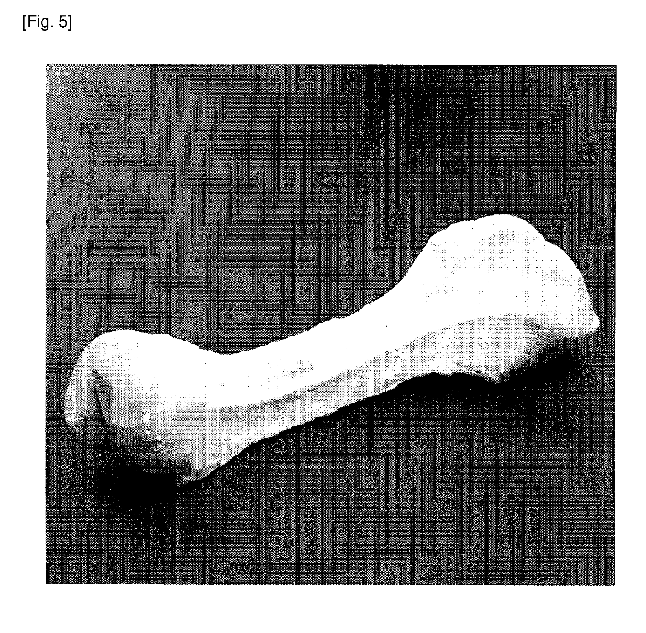

(1) Diatomite which has been baked at 1,250°C or higher was ground to a size of about 100 mesh.
(2) Red clay was finely ground to a size of about 5,000 mesh.
(3) 100 parts by weight of the diatomite powder prepared in (1) was mixed with 15 parts by weight of the red clay powder prepared in (2) and 20 parts by weight of glycerin, kneaded in a kneader, 1 part by weight of a coagulant (organic polymer coagulant, available from Hansol Chemical Inc.) was added thereto, followed by continuously kneading until the substances were completely combined to form a stable shape. As a result, a clay composition which exhibited substantially similar properties to clay and was highly adhesive was obtained (FIGS. 4 and 5).

### Example 3

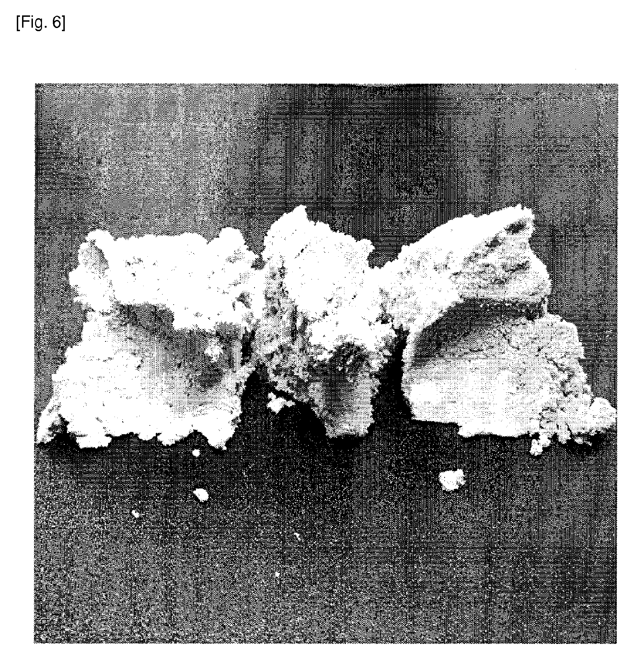

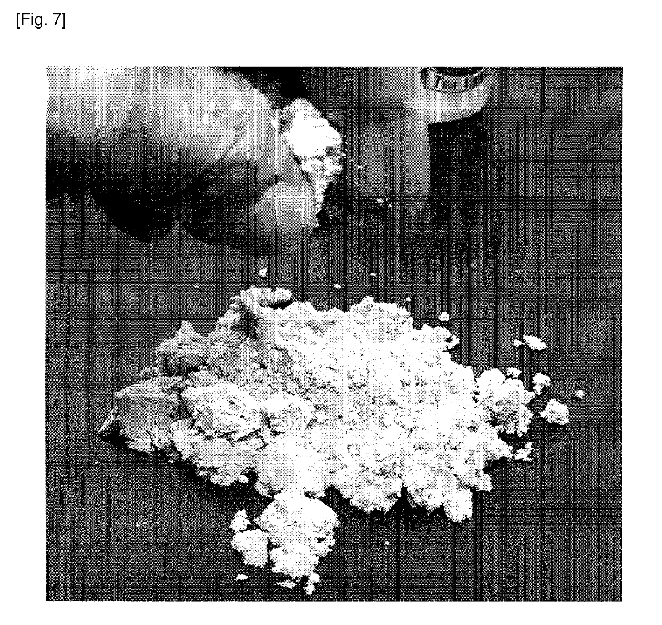

(1) Diatomite which has been baked at 1,250°C or higher was ground to a size of about 100 mesh.
(2) Red clay was finely ground to a size of about 3,000 mesh.
(3) 100 parts by weight of the diatomite powder prepared in (1) was mixed with 10 parts by weight of the red clay powder prepared in (2) and 20 parts by weight of glycerin, kneaded in a kneader, 0.5 parts by weight of a coagulant (organic polymer coagulant, available from Hansol Chemical Inc.) was added thereto, followed by continuously kneading until the substances were completely combined to form a stable shape. As a result, a clay composition which exhibited substantially similar properties to soil and was softly adhesive was obtained (FIGS. 6 and 7).

### Example 4

(1) Diatomite which has been baked at 1,250°C or higher was ground to a size of about 100 mesh.
(2) Red clay was finely ground to a size of about 1,000 mesh.
(3) 100 parts by weight of the diatomite powder prepared in (1) was mixed with 20 parts by weight of the red clay powder prepared in (2) and 25 parts by weight of glycerin, and the resulting mixture was kneaded in a kneader until the substances were completely combined to form a stable shape. As a result, a clay composition which exhibited substantially similar properties to sand and was moist and adhesive was obtained. The composition and properties of clay compositions prepared in Examples 1 to 4 are summarized in Table 1 below.

**TABLE 1**

| No. of Example | First base material (diatomite, 100 mesh) | Second base material: red clay | | Liquid: glycerin | Coagulant | Properties |
|---|---|---|---|---|---|---|
| 1 | 100 | - | | 15 | 1 | Medium-adhesive soil |
| 2 | 100 | 5,000 mesh | 15 | 20 | 1 | Highly adhesive clay |
| 3 | 100 | 3,000 mesh | 10 | 20 | 0.5 | Soil-like soft clay |
| 4 | 100 | 1,000 mesh | 20 | 25 | 0 | Moist adhesive sand-like clay |

### Example 5

The same process as in Example 1 was performed except that 5 parts by weight of a grapefruit extract (DF-100™) as an antibacterial substance was added to glycerin, dissolved therein and mixed with a diatomite powder and a red clay powder. The clay composition of Example 5, which contains a grapefruit extract, was compared with the clay composition of Example 1 which does not contain a grapefruit extract in terms of antibacterial properties. The testing was performed by FITI Testing & Research Institute and was carried out by culturing a test strain solution at 37±1°C for 24 hours by shaking (120 times/min) and measuring the number of strains. An inoculums medium was 1 mL of TSB and the sample was 10 g. Testing was performed on two strains. *Staphylococcus aureus* ATCC 6538 was used as the first strain and *Escherichia coli* ATCC 25922 was used as the second strain. The results are shown in Table 2 below.

**TABLE 2**

| | | Ex. 1 | Ex. 5 |
|---|---|---|---|
| First strain | Number of initial stains | 1.8x 10⁴ 10⁴ | 1.8x 10⁴ |
| | After 24 hr | 1.6x 10⁷ | < 10 |
| | Strain decrease | - | 99.9 |
| | fraction | | |
| Second strain | Number of initial stains | 2.0x 10⁴ | 2.0x 10⁴ |
| | After 24 hr | 1.1x 10⁸ | < 10 |
| | Strain decrease fraction | - | 99.9 |

### Examples 6 to 13

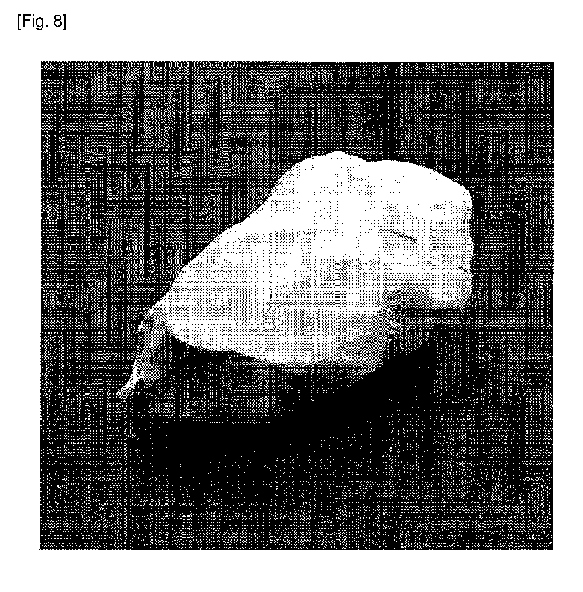

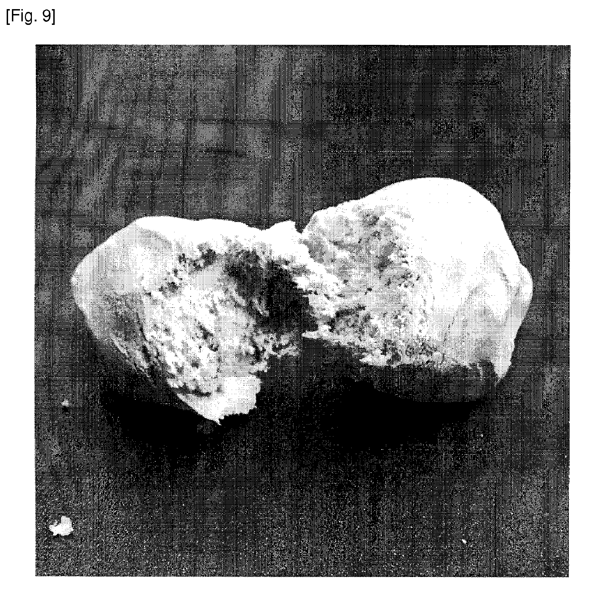

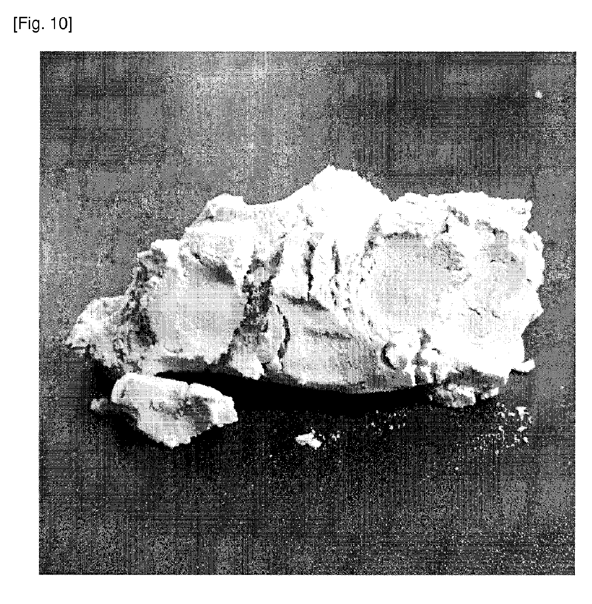

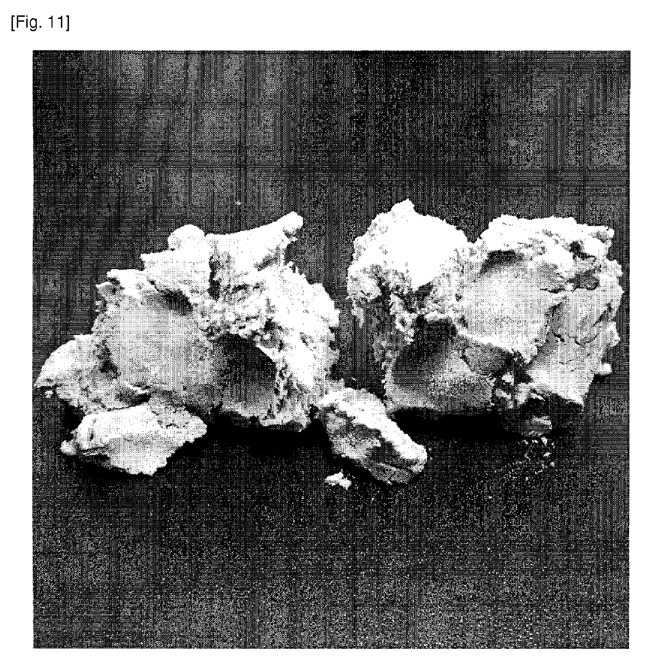

The same process as in Example 2 was performed except that 90 parts by weight of a glycerin mixture set forth in Table 3 was used instead of 40 parts by weight of glycerin. At this time, gelatin was dissolved and mixed with glycerin, and liquid paraffin was mixed with glycerin and further mixed with other components, followed by kneading. Polyvinyl alcohol (PVA) was dissolved in a small amount of water and mixed with glycerin. The composition of glycerin mixture and properties of prepared clay composition are shown in Table 2 below. The clay composition of Example 10 is shown in FIGS. 8 and 9 and the clay composition of Example 13 is shown in FIGS. 10 and 11.

**TABLE 3**

| Examples | Glycerin mixture (based on %) | | Properties |
|---|---|---|---|
| 6 | Glycerin 50 | Liquid paraffin 50 | Soil-like highly crumble clay |
| 7 | Glycerin 70 | Liquid paraffin 30 | Soft clay |
| 8 | Glycerin 90 | Liquid paraffin 10 | Highly adhesive clay |
| 9 | Glycerin 50 | Gelatin 50 | Rubber clay-like highly smooth clay |
| 10 | Glycerin 70 | Gelatin 30 | Smooth and soft clay |
| 11 | Glycerin 90 | PVA 10 | Loose and low-adhesion clay |
| 12 | Glycerin 70 | PVA 30 | Soft clay |
| 13 | Glycerin 50 | PVA 50 | Gummy clay |

### Example 14

The same process as in Example 1 was performed except that propylene glycol was used instead of glycerin. As a result, a composition having adhesive clay properties was obtained. The prepared composition was slightly adhesive and loose, as compared to the composition of Example 1.

### Example 15

The same process as in Example 1 was performed except that polyethylene glycol was used instead of glycerin. As a result, a composition having adhesive clay properties was obtained. The prepared composition was slightly adhesive and loose, as compared to the composition of Example 1 and exhibited similar adhesion and different texture, as compared to the composition of Example 14.

### [Industrial Applicability]

As apparent from the afore-going, the present invention provides a clay composition which is not hardened, is environmentally friendly, exhibits various properties of clay, soil and sand, and is widely used for play, education, work modeling and the like, instead of conventional general clay or sand, artificial clay, rubber clay, paper clay and the like. Furthermore, the clay composition may be used as an alternative of sand and soils of contaminated outdoor playgrounds.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A clay composition comprising:
(a) 100 parts by weight of a diatomite powder (a first base material) cut to a size of 10 to 10,000 mesh; and
(b) 5 to 70 parts by weight of an amphiprotic (hydrophilic and lipophilic) liquid,
wherein the clay composition has plasticity as an inherent property of clay and looseness as an inherent property of soil, can be repeatedly aggregated and separated as an inherent property of sand, is not readily hardened in air and can be repeatedly used without water, when the diatomite powder and the liquid are sufficiently mixed and kneaded such that the liquid passes through pores of the diatomite powder and is dispersed therein.

2. The clay composition according to claim 1, further comprising 10 to 100 parts by weight of a second base material,
wherein the second base material is one or more selected from the group consisting of sand, shells, quartz sand, red clay, white clay, cereals, hard shells of nuts, Cocopeat, and sawdust and has a size equivalent to or smaller than 1/10 of the diatomite powder.

3. The clay composition according to claim 1 or 2, wherein the liquid is one or more selected from the group consisting of propylene glycol (PG), polyethylene glycol (PEG), and glycerin.

4. The clay composition according to claim 3, wherein the second base material has a particle size of 100 to 100,000 mesh.

5. The clay composition according to claim 3, wherein the diatomite is baked at 1,250°C or higher.

6. The clay composition according to claim 3, further comprising a natural antibacterial substance.

7. The clay composition according to claim 6, wherein the natural antibacterial substance is one or more selected from the group consisting of a grapefruit extract, a garlic extract containing allicin, a green tea extract and nano-silver.

8. The clay composition according to claim 3, further comprising 0.1 to 70 parts by weight of a coagulant.

9. The clay composition according to claim 3, further comprising 10 to 100 parts by weight of polyvinyl alcohol or gelatin, wherein the polyvinyl alcohol or gelatin is dissolved and contained in the liquid.

10. The clay composition according to claim 3, further comprising 0.1 to 50 parts by weight of one or more selected from the group consisting of liquid paraffin and waxes.

11. A method for preparing a clay composition, comprising:
mixing a component (a) below with a component (b) below; and
sufficiently kneading the components (a) and (b) such that the liquid passes through pores of the diatomite powder and is dispersed therein.
(a) 100 parts by weight of diatomite powder (first base material) cut to a size of 10 to 10,000 mesh, and
(b) 5 to 70 parts by weight of an amphiprotic (hydrophilic and lipophilic) liquid

12. The method according to claim 11, wherein the mixing further includes mixing the components with 10 to 100 parts by weight of a second base material,
wherein the second base material is one or more selected from the group consisting of sand, shells, quartz sand, red clay, white clay, cereals, hard shells of nuts, Cocopeat and sawdust, and has a size equivalent to or smaller than 1/10 of the diatomite powder.

13. The method according to claim 11 or 12, wherein the liquid is one or more selected from the group consisting of propylene glycol (PG), polyethylene glycol (PEG), and glycerin.

14. The method according to claim 13, wherein the diatomite is baked at 1,250°C or higher.

15. The method according to claim 13, further comprising adding a natural antibacterial substance to the liquid, followed by dissolution, before the mixing.

16. The method according to claim 13, wherein the mixing further includes mixing the components with 0.1 to 70 parts by weight of a coagulant.

17. The method according to claim 13, further comprising dissolving 10 to 100 parts by weight of polyvinyl alcohol or gelatin in the liquid before the mixing.

18. The method according to claim 13, further comprising adding 0.1 to 50 parts by weight of one or more selected from the group consisting of liquid paraffin and waxes to the liquid or the kneaded dough, followed by homogeneously mixing to coat the composition with an oil.
